# FASCICULE DE BREVET EUROPEEN

(11) **EP 2 112 016 B1**
(45) Date de publication et mention de la délivrance du brevet: **29.09.2010**
(21) Numéro de dépôt: 09157780.9
(22) Date de dépôt: 09.04.2009
(51) Int. Cl.: B60N 2/015

(54) **Mécanisme d'ancrage d'un siège notamment d'un siège de véhicule automobile**
Verankerungsmechanismus für einen Sitz, insbesondere einen Kraftfahrzeugsitz
Anchoring mechanism for a seat, in particular an automotive seat

(30) Priorité: 21.04.2008 FR 0802215
(43) Date de publication de la demande: 28.10.2009
(73) Titulaire: GRUPO ANTOLIN-INGENIERIA, S.A., 09080 Burgos (ES)
(72) Inventeur: Blanger, Vincent, 42210, Craintilleux (FR); Hamtache, Nordine, 42700, Firminy (FR); Tronchon, Damien, 42330, Saint Medard en Forez (FR)
(74) Mandataire: Delorme, Nicolas

(56) Documents cités:
- DE-U1- 29 912 439
- US-A- 4 773 693
- US-A- 4 805 952

## Description

La présente invention concerne un mécanisme d'ancrage pour siège de véhicule automobile.

De nombreux véhicules automobiles sont équipés de sièges amovibles. Pour cela, les sièges sont dotés de mécanismes d'ancrage assurant le verrouillage d'un siège sur le plancher et qui permettent de déverrouiller le siège pour l'extraire du véhicule.

Les documents US-A-4 773 693 (correspondant au préambule de la revendication 1) et DE-U1-299 12 439 montrent des sièges possédant un mécanisme d'ancrage et de verrouillage sur un fil d'ancrage avant et sur un fil d'ancrage arrière.

Le bon ancrage d'un siège amovible est un point tout à fait critique dans la sécurité du véhicule.

En effet, en cas d'ancrage défectueux, le siège peut se détacher du plancher lors d'accélération ou de décélération du véhicule avec des conséquences potentiellement dramatiques pour les passagers qui sont assis sur le siège en question, mais également pour les autres passagers du véhicule.

Certains sièges actuels peuvent donner à un utilisateur l'impression d'être correctement ancrés alors qu'en réalité ils sont incorrectement ancrés.

Dans ce contexte technique, un but de l'invention est de proposer un mécanisme d'ancrage d'un siège sur un plancher de véhicule automobile permettant un ancrage qui garantisse un bon verrouillage sans intervention d'un utilisateur.

L'invention concerne un mécanisme d'ancrage d'un siège notamment d'un siège de véhicule automobile permettant un verrouillage du siège sur un fil d'ancrage avant et sur un fil d'ancrage arrière disposé dans un plancher du véhicule et un déverrouillage du siège des deux fils, le mécanisme d'ancrage présentant un pied avant destiné à être engagé sur le fil d'ancrage avant et un pied arrière destiné à être engagé sur le fil d'ancrage arrière, au moins l'un des pieds avant ou arrière étant équipé de moyens de verrouillage. Le mécanisme est caractérisé en ce qu'il comprend en outre:
- des moyens de détrompage permettant de positionner selon une direction verticale du véhicule le siège dans une position telle que le pied avant repose sur le fil d'ancrage avant et le pied arrière repose sur le fil d'ancrage arrière, et
- des moyens de détection de contact avec au moins un fil d'ancrage, les moyens de détection entrainant le déclenchement de moyens de verrouillage lors du déplacement du siège.

L'invention propose ainsi un mécanisme d'ancrage dont la mise en oeuvre est particulièrement simple et sécurisée. En effet, l'ancrage d'un siège équipé du mécanisme selon l'invention se fait selon deux séquences successives. La première séquence prévoit une approche verticale du siège vers les deux fils d'ancrage ; cette approche est encadrée par des moyens de détrompage qui permettent d'assurer un positionnement du siège dans une position d'attente dans laquelle le pied avant et le pied arrière reposent sur respectivement le fil d'ancrage avant et le fil d'ancrage arrière. Cette position d'attente est le préalable nécessaire à un verrouillage correct. La seconde séquence prévoit un déplacement longitudinal du siège au cours duquel des moyens de détection de contact avec au moins un fil d'ancrage ont deux fonctions : d'une part, ils contrôlent la présence effective du fil d'ancrage et d'autre part, ils déclenchent le verrouillage. Ainsi, le verrouillage ne peut être effectué qu'en présence et sur un fil d'ancrage. L'invention élimine donc le risque d'un déclenchement des moyens de verrouillage à vide qui pourrait donner l'illusion d'un verrouillage correct.

Les caractéristiques complémentaires énumérées ci-aprés font l'objet des revendications dépendantes.

Selon une forme de réalisation préférée de l'invention, les moyens de détection de fil d'ancrage comprennent un détecteur de fil d'ancrage mobile en rotation superposé aux moyens de verrouillage conçus pour, lors d'un contact avec un fil d'ancrage, entrer en rotation depuis une position de non détection dans laquelle le détecteur de fil masque les moyens de verrouillage vers une position de détection dans laquelle le détecteur de fil d'ancrage ouvre l'accès aux moyens de verrouillage et déclenche les moyens de verrouillage.

Il est envisagé que les moyens de verrouillage comprennent un verrou fixe et un verrou mobile en rotation conçus pour enserrer un fil d'ancrage dans une position de verrouillage du mécanisme, la rotation du verrou mobile étant pilotée par le détecteur de fil.

Pour réaliser la rotation du verrou mobile, le détecteur de fil présente une surface de détection superposée sur le verrou fixe et une saillie de pilotage conçue pour coopérer avec une encoche pratiquée dans le verrou mobile en vue d'amener le verrou mobile vers sa position de verrouillage lors de la rotation du détecteur de fil contre un fil d'ancrage.

En outre le mécanisme d'ancrage comprend des moyens élastiques qui agissent sur le verrou mobile et sur le détecteur de fil d'ancrage en vue de positionner le détecteur de fil d'ancrage vers sa position de non détection dans laquelle le détecteur de fil d'ancrage masque le crochet et pousse le verrou mobile vers sa position de non verrouillage.

Le mécanisme d'ancrage peut ainsi comprendre un ressort en épingle ayant au moins une spire prolongée par une première branche qui est retenue par un pontet supporté par le détecteur de fil d'ancrage et par une seconde branche qui s'appuie sur le verrou mobile.

Pour commander le déverrouillage le mécanisme d'ancrage comprend une poignée montée en pivot sur un axe lié au verrou mobile par un doigt engagé dans une lumière pratiquée dans le verrou mobile.

Le détrompage du positionnement du mécanisme vis à vis des fils d'ancrage peut être réalisé grâce au fait que le mécanisme d'ancrage comprend une butée postérieure et un talon au niveau de son pied arrière et un méplat au niveau du pied avant.

Selon une forme d'exécution, le mécanisme d'ancrage comprend une platine qui intègre au moins l'un des éléments du groupe comprenant le verrou fixe, la butée postérieure, le talon, un axe de rotation du détecteur de fil d'ancrage, un axe de rotation du verrou mobile, une butée d'arrêt du verrou mobile, un pion d'arrêt du détecteur de fil d'ancrage.

De plus, le mécanisme d'ancrage comprend deux carters latéraux.

Il est prévu que le carter latéral sur lequel est montée la poignée reçoive une zone témoin qui est masquée par la poignée lorsque le mécanisme est verrouillé sur le fil d'ancrage.

Pour sa bonne compréhension, l'invention est décrite en référence au dessin ci annexé représentant à titre d'exemple non limitatif une forme de réalisation d'un mécanisme d'ancrage selon celle-ci.
Figure 1 est une vue en perspective d'un siège équipé du mécanisme d'ancrage selon l'invention,
Figures 2 à 4 montrent en vue de côté le mécanisme à différentes phases d'ancrage sur deux fils d'ancrage,
Figures 5 à 9 représentent selon leurs indices a et b le mécanisme d'ancrage selon l'invention, respectivement, en vue de côté et en vue de côté avec retrait d'un carter latéral de protection à différentes phases d'ancrage et de désancrage du siège.

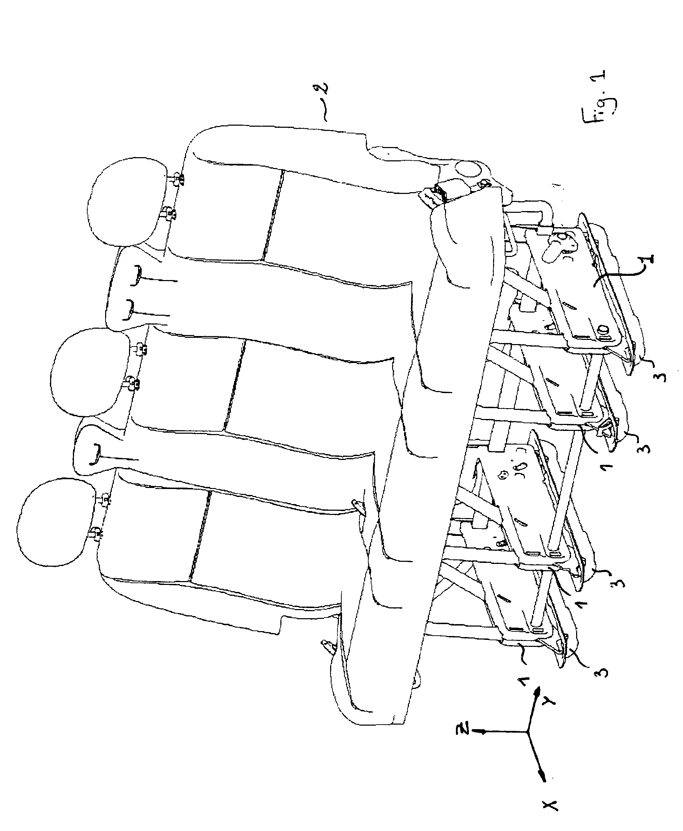

Dans le présent document, on entend par siège, un équipement ayant une assise et un dossier pouvant accueillir un ou plusieurs passagers. Dans l'exemple de la figure 1, on a ainsi représenté un siège à trois places qui est communément appelé banquette.

On précise également que la description est réalisée par rapport à un référentiel cartésien XYZ lié à un véhicule, l'axe X étant orienté dans la direction longitudinale du véhicule, l'axe Y est orienté dans la direction transversale du véhicule et l'axe Z est orienté dans la direction verticale du véhicule. Les termes notamment longitudinal, transversal, avant, arrière, antérieur, postérieur, vertical sont définis dans ce référentiel.

La figure 1 montre, en perspective, un exemple de siège 2 équipé du mécanisme d'ancrage 1 selon l'invention.

Le cahier des charges de nombreux véhicules prévoit que les sièges puissent être retirés du véhicule et réinstallés selon les besoins de l'utilisateur.

Dans le cas d'un siège volumineux comme celui montré à la figure 1, la manoeuvre d'extraction et d'installation du siège peut être délicate ; cela peut présenter alors un risque de verrouillage incorrect du siège. Ce risque de verrouillage incorrect s'applique à tout type de siège ; un siège qu'il soit à 1, 2, ou 3 places est, par nature, un équipement volumineux et lourd.

Le siège de la figure 1 présente quatre liaisons au plancher. Dans l'exemple montré seules les liaisons extérieures sont équipées d'un mécanisme d'ancrage 1 selon l'invention ; les mécanismes d'ancrage sont engagés dans des rails 3 intégrés dans un plancher d'un véhicule. De façon connue en soi, chacun des rails 3 reçoit deux fils avant 4a et arrière 4b. Les fils 4a et 4b sont dimensionnés pour transmettre au plancher les efforts notamment de décélération auxquels peut être soumis le siège.

Le mécanisme d'ancrage 1 tel qu'il est illustré sur les figures présente un ensemble de pièces mobiles et statiques qui coopèrent pour assurer le verrouillage du siège.

Le mécanisme est logé dans un boîtier sensiblement parallélépipédique. Ce boîtier peut comprendre deux carters 5 de tôles dans lesquels les composants du mécanisme d'ancrage sont insérés.

Au niveau de sa partie avant, le mécanisme d'ancrage 1 possède un pied avant 7 qui est fixe par rapport aux carters 5.

Le pied avant 7 possède à son extrémité un crochet 8 en forme générale de C dimensionné de manière à venir se fixer sur le fil d'ancrage 4a situé à l'avant du rail 3.

Il convient de noter une disposition importante du pied d'ancrage avant 7 avec la présence d'un méplat 9 qui s'étend à l'horizontal depuis le crochet 8 en C. La fonction de ce méplat 9 apparaîtra plus loin dans la description.

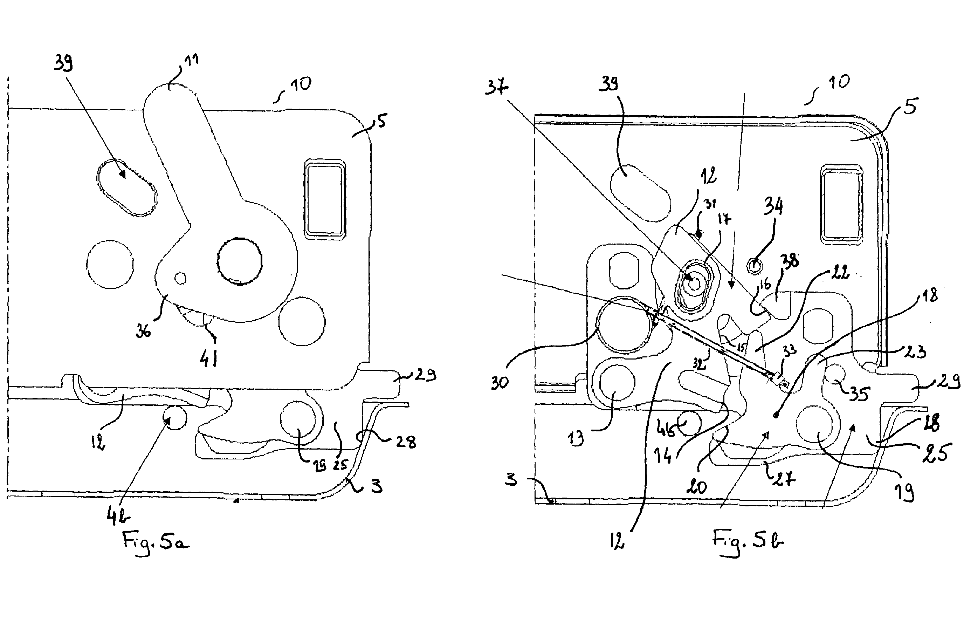

Le pied arrière 10 du mécanisme d'ancrage assure le verrouillage et le déverrouillage du siège et donc possède plusieurs pièces mobiles et une poignée 11 permettant à un utilisateur de déverrouiller le siège. Les figures 5a et 5b font apparaitre plus spécialement la structure du pied arrière 10.

De façon originale, le pied arrière 10 du mécanisme d'ancrage possède deux pièces mobiles en pivot qui sont disposées entre les carters 5.

Le pied arrière 10 possède ainsi un verrou mobile 12 en rotation. Le verrou mobile 12 possède un palier et est monté de manière libre en rotation sur un axe 13.

Le verrou mobile 12 possède trois zones fonctionnelles, à savoir :
- une surface d'appui 14 pouvant venir en contact d'un fil d'ancrage 4b et qui possède donc une concavité correspondant au diamètre du fil d'ancrage 4b et,
- une encoche 15,
- une surface de butée 16.

Le verrou mobile 12 présente de plus une lumière 17 oblongue en arc de cercle.

Associé au verrou mobile 12, le pied arrière 10 possède un détecteur de fil d'ancrage 18. Le détecteur de fil d'ancrage 18 est une pièce en tôle qui possède un palier dans lequel est engagé un axe 19. Le détecteur de fil d'ancrage 18 est donc une pièce mobile en rotation par rapport à l'axe 19.

Les zones fonctionnelles du détecteur de fil d'ancrage 18 sont :
- une surface de détection 20,
- une saillie de pilotage 22 dont le profil d'ancrage est complémentaire de celui de l'encoche 15 du verrou mobile 12,
- une butée 23.

Pour ce qui est des éléments fixes que l'on trouve à l'intérieur des deux carters 5, outre le pied avant 7, on relève essentiellement la présence d'une platine 25, par exemple, de tôle découpée ou emboutie.

Dans l'exemple illustré, la platine 25 regroupe plusieurs éléments fonctionnels qui pourraient, dans une forme de réalisation du mécanisme, être des éléments autonomes.

On trouve ainsi intégrés dans la platine 25 :
- un verrou fixe 27 en forme générale de C,
- une butée postérieure 28 et
- un talon 29.

Le verrou mobile 12 peut donc se déplacer en direction du verrou fixe 27 sur un secteur angulaire borné par deux positions extrêmes à savoir une position de verrouillage et une position de déverrouillage.

Par verrouillage, on entend la création d'une liaison fixe entre le siège et le véhicule ; le déverrouillage est la rupture de cette liaison fixe à l'initiative de l'utilisateur.

La platine 25 supporte également les axes 13 et 19 sur lesquels tournent le verrou mobile 12 et le détecteur de fil d'ancrage 18.

La platine 25 est de plus équipée d'une butée 38 qui limite le déplacement angulaire du verrou mobile 12 et d'un pion 35 qui limite le déplacement angulaire du détecteur de fil d'ancrage 18.

Les différents éléments internes sont pris en sandwich entre les deux carters 5.

Le verrou mobile 12 et le détecteur de fil d'ancrage 18 sont liés par un ressort 30 en épingle. Le ressort 30 en épingle possède un enroulement de spires et deux branches 31 et 32. L'une des branches 31 du ressort 30 est en appui contre le verrou mobile 12 tandis que la seconde branche 32 de ressort est retenue par un pontet 33 qui dépasse du détecteur de fil d'ancrage 18.

Le verrou mobile 12 est relié à la poignée 11 qui se trouve à l'extérieur du carter latéral 5.

La poignée 11 est montée sur un axe 34 autour duquel la poignée est libre en rotation. La poignée 11 possède une excroissance 36 qui supporte un doigt 37. Le doigt 37 est engagé dans la lumière oblongue 17 du verrou mobile 12.

Le carter latéral 5 possède une découpe 41 permettant au doigt 37 lié à la poignée 11 d'atteindre le verrou mobile 12.

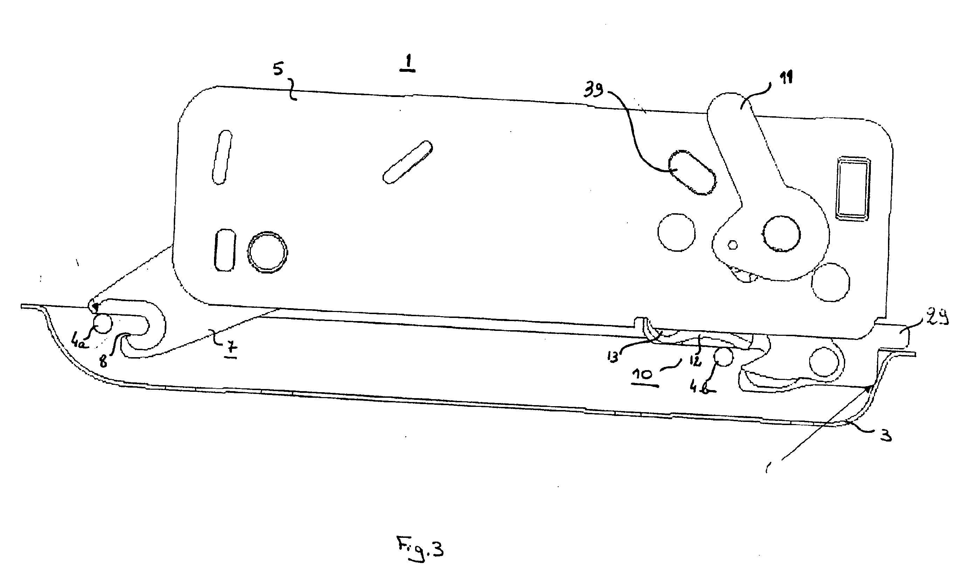

Les figures 3a et 3b montrent le mécanisme dans son état non sollicité.

Dans cet état, le ressort en épingle 30 sollicite la rotation du détecteur de fil d'ancrage 18 vers sa position de déverrouillage, c'est-à-dire jusqu'à une position extrême dans laquelle la butée 23 vient en appui contre le pion 35 porté par la platine 25.

Il doit être noté que le détecteur de fil d'ancrage 18 pilote la position angulaire du verrou mobile 12 par la saillie 22 ; en effet lorsque le pied arrière est dans la position illustrée à la figure 3a, la saillie 22 maintient le verrou mobile en appui contre la butée 38 supportée par la platine 25.

On peut remarquer que, dans cette position, le verrou fixe 27 est partiellement obturé par le détecteur de fil d'ancrage 18.

Il est, en outre, à noter la présence d'une zone témoin 39 apposée sur le carter latéral ; cette zone témoin 39 peut, par exemple, être colorée.

La zone témoin 39 est située sur la trajectoire angulaire de la poignée 11, de sorte que la zone témoin 39 peut être masquée par la poignée 11 ou peut être laissée apparente.

La partie complémentaire du mécanisme d'ancrage est encastrée dans le plancher d'un véhicule.

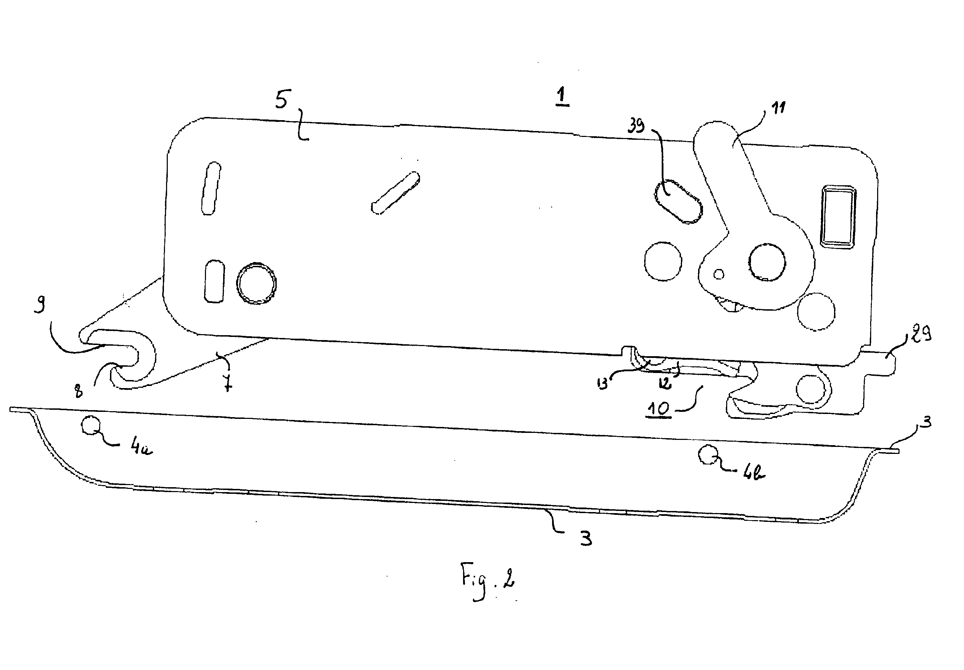

Il s'agit de rails 3 fermés à leurs extrémités. Les rails 3 sont disposés longitudinalement dans le plancher du véhicule et possèdent deux fils 4a et 4b généralement orientés transversalement par rapport au véhicule. Par fil, on entend un élément métallique de section circulaire susceptible de transmettre au plancher les efforts mécaniques encaissés par le siège. La figure 2 est une vue partielle d'un siège dont seul le mécanisme d'ancrage est représenté en approche d'un rail.

La figure 3 fait apparaître la première phase de la séquence de verrouillage du mécanisme d'ancrage sur le rail.

On note que le mécanisme d'ancrage 1 repose sur les deux fils 4a et 4b du rail 3.

Le mécanisme d'ancrage ne peut pas occuper d'autre position puisque :
- au niveau du pied avant 7, le méplat 9 qui prolonge le crochet avant interdit de passer au dessous du fil d'ancrage 4a avant,
- au niveau du pied arrière 10, la butée postérieure 28 de la platine vient en butée de la paroi d'extrémité du rail 3 et le talon 29 permet d'assurer que le pied avant n'est pas passé au dessus du fil d'ancrage avant.

La combinaison de dispositions concernant le pied avant 7 - méplat 9 - et le pied arrière 10 - butée postérieure 28 et talon 29 - fonctionne à la façon d'un détrompeur. En d'autres termes, l'ensemble de ces dispositions évite une erreur humaine dans le positionnement du siège dans les rails.

Dans l'exemple illustré le siège ne peut être positionné par rapport au plancher que dans une unique position qui est généralement la position dans laquelle le siège est disposé dans le sens de déplacement. Il est possible d'envisager que les moyens de détrompage autorisent le positionnement du siège dans le sens inverse de la marche.

On voit donc que la première phase de positionnement du siège consiste en un mouvement simple de pose du siège sur les fils 4a et 4b de chaque rail 3, comme le montre la figure 3.

Les figures 5a et 5b qui correspondent à la figure 3 montrent le pied arrière 10 posé sur le fil d'ancrage arrière 4b du rail.

La deuxième phase de verrouillage se fait en exerçant une poussée sur le siège dans le sens longitudinal.

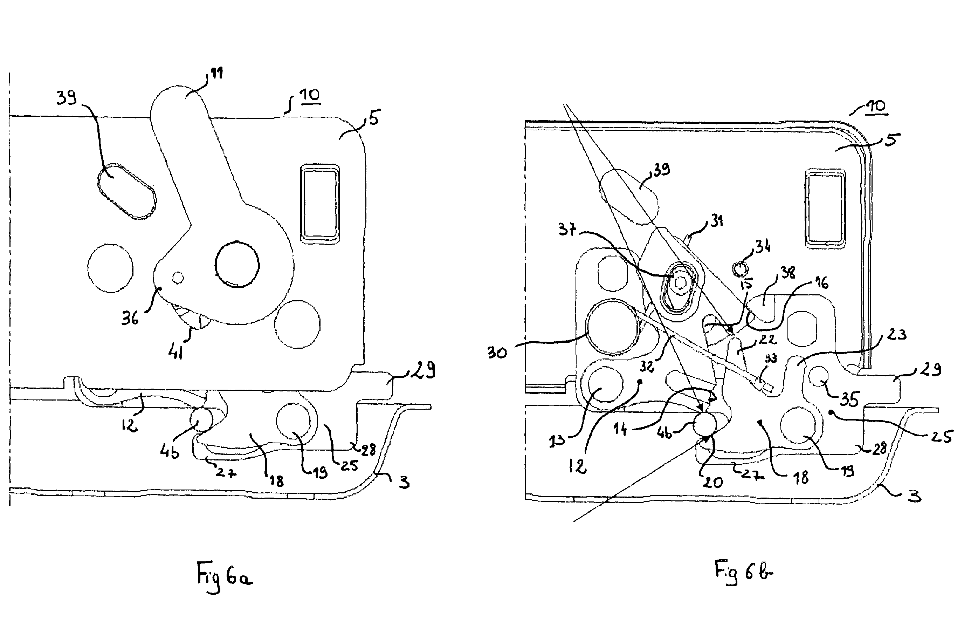

Les figures 6a et 6b permettent d'apprécier la manière avec laquelle se fait l'accostage du pied arrière 10 sur le fil d'ancrage arrière 4b du rail.

Au cours du déplacement longitudinal du pied arrière, le détecteur de fil d'ancrage 18 arrive en butée du fil d'ancrage 4b. Le fil d'ancrage 4b est fixe et, par conséquent, le détecteur de fil d'ancrage 18 qui est mobile en rotation bascule dans le sens anti horaire. Les figures 6a et 6b illustrent cette phase d'ancrage.

La rotation du détecteur de fil d'ancrage 18 dégage l'accès vers le verrou fixe 27 et simultanément se traduit par la rotation du verrou mobile 12. En effet, la saillie 22 du détecteur de fil d'ancrage 18 ne maintient plus le verrou mobile 12 dans sa position relevée du fait du pivotement du détecteur de fil d'ancrage 18.

Au cours de la rotation du verrou mobile 12, la saillie 22 du détecteur pénètre dans l'encoche 15 du verrou mobile 12. La rotation du verrou mobile 12 a également comme effet secondaire d'entraîner la poignée 11 vers sa position dans laquelle la poignée masque la zone témoin 39.

Ainsi, il apparait que la mise en place d'un siège équipé du mécanisme d'ancrage selon l'invention se fait avec la combinaison de deux mouvements :
- un premier mouvement d'approche du siège dans des rails présents dans le plancher du véhicule ; ce premier mouvement est encadré par des moyens de détrompage qui font qu'un utilisateur ne peut pas positionner le siège de manière incorrecte.
- un deuxième mouvement longitudinal du siège ; la particularité du mécanisme selon l'invention se manifeste notamment dans cette phase car c'est le contact avec le fil d'ancrage qui déclenche le verrouillage. En d'autres termes, si le mécanisme d'ancrage ne prend pas appui contre le fil, il ne peut se produire de verrouillage. Le risque de verrouillage incorrect est donc totalement écarté.

On peut également préciser que le mécanisme d'ancrage selon l'invention est naturellement dans sa position non verrouillée. En l'absence de contact d'un fil d'ancrage avec le détecteur de fil d'ancrage 18, le mécanisme se place automatiquement dans sa position de non verrouillage. Ainsi en cas de mauvaise introduction ou en cas de retrait puis réinsertion du mécanisme, celui-ci se « réinitialise » en reprenant sa position de déverrouillage.

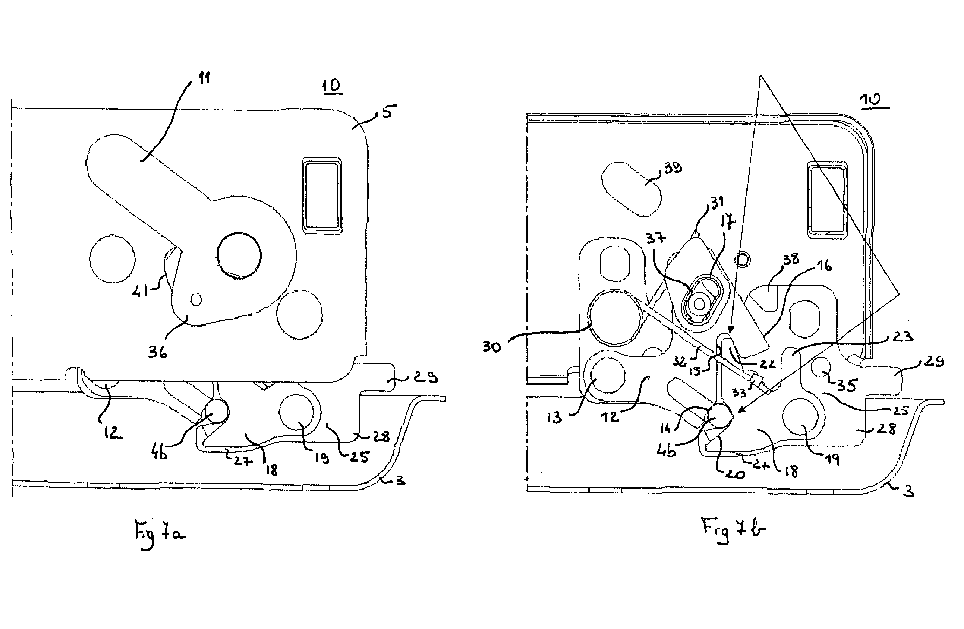

Les figures 7a et 7b montrent le mécanisme d'ancrage en position de verrouillage. On voit sur la figure 7a la poignée 11 qui masque la zone témoin 39 ce qui indique à l'utilisateur que le verrouillage est correct. La figure 7b fait apparaitre le fil d'ancrage 4b pris en sandwich entre le verrou fixe 27 et le verrou mobile 12. Pour prévenir tout risque de bruyance, le détecteur de fil d'ancrage n'est pas en contact du fil d'ancrage 4b.

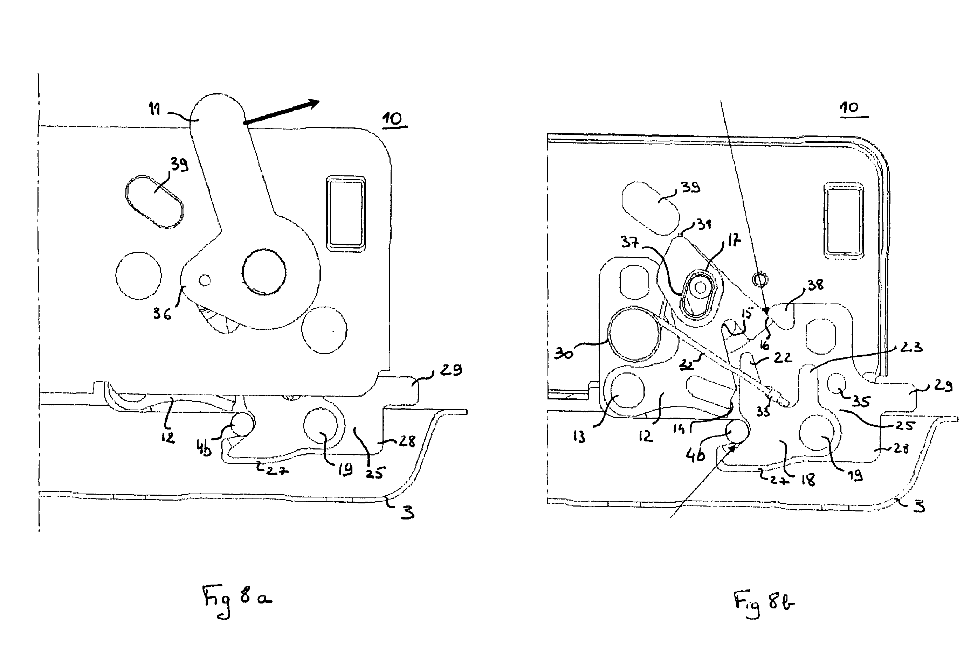

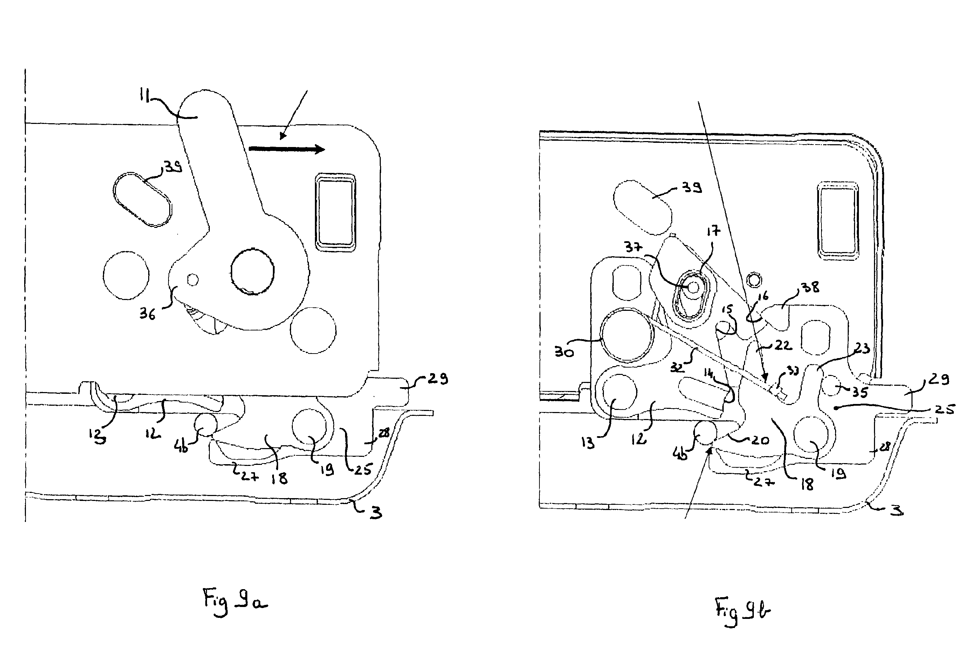

L'opération de déverrouillage est plus spécialement illustrée aux figures 8a, 8b et 9a, 9b.

Dans un premier temps, l'utilisateur exerce une traction sur la poignée 11, comme cela est montré par la flèche de la figure 8a.

La figure 8b montre la position du verrou mobile 12 qui est lié à la poignée 11. Le verrou mobile 12 ne bloque plus le fil d'ancrage 4b ; dans cette position, le fil d'ancrage 4b, cependant, empêche la remontée du détecteur de fil d'ancrage 18 qui est sollicité par le ressort en épingle 30.

On peut préciser que dans cette position du mécanisme si l'utilisateur cesse d'exercer une traction sur la poignée 11 le mécanisme reprend sa position de verrouillage.

En revanche si l'utilisateur poursuit sa traction sur la poignée 11, il entraine alors le siège longitudinalement vers l'arrière.

Le recul du siège fait que le détecteur de fil d'ancrage se dégage du fil d'ancrage 4b et tourne sous l'effet du ressort 30 jusqu'à sa position extrême dans laquelle le détecteur 18 est en butée du pion 35. La saillie de pilotage 22 du détecteur vient alors empêcher la rotation du verrou mobile 12. Dans cette position montrée figure 9b, le verrou mobile 12 est maintenu dans sa position déverrouillée et la poignée 11 est également maintenue dans sa position déverrouillée qui laisse apparaître la zone témoin 39 de son déverrouillage.

Bien entendu l'invention n'est pas limitée à la forme de réalisation décrite ci-dessus à titre d'exemple non limitatif mais elle en embrasse au contraire toute les formes de réalisation, si comprises dans le cadre de l'invention tel que définie par les revendications;

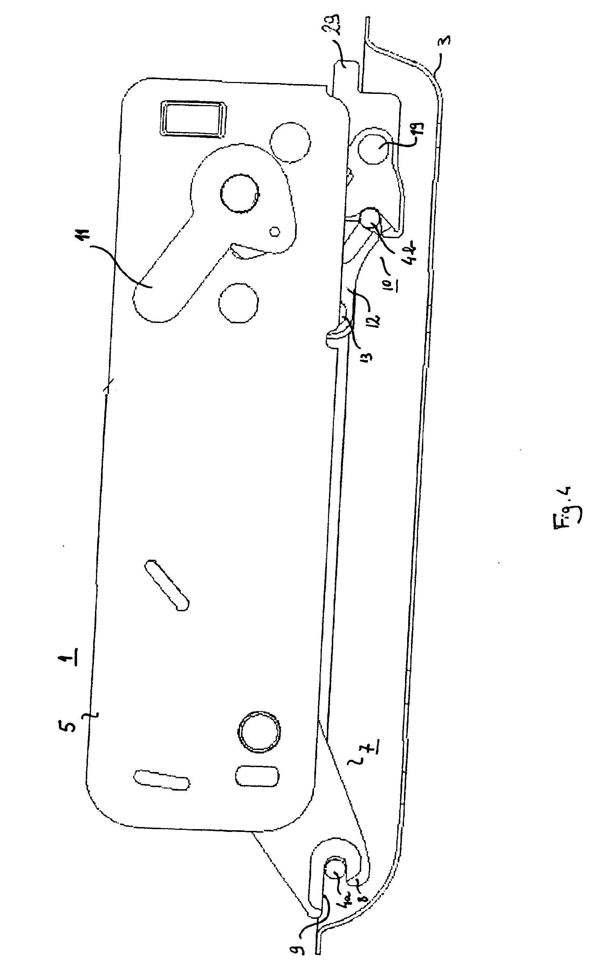

Ainsi, les fonctions qui dans l'exemple illustré sur les figures 1 à 9, sont embarquées sur le pied arrière pourraient tout aussi bien se trouver embarquées sur le pied avant. Il pourrait également être envisagé de doter le siège de moyens de détection de fil d'ancrage sur le pied avant et sur le pied arrière.

## Revendications

1. Mécanisme d'ancrage (1) d'un siège notamment d'un siège de véhicule automobile permettant un verrouillage du siège sur un fil d'ancrage (4a) avant et sur un fil d'ancrage arrière (4b) disposé dans un plancher du véhicule et un déverrouillage du siège des deux fils, le mécanisme d'ancrage présentant un pied avant (7) destiné à être engagé sur le fil d'ancrage avant (4a) et un pied arrière (10) destiné à être engagé sur le fil arrière (4b), au moins l'un des pieds avant ou arrière étant équipé de moyens de verrouillage
**caractérisé en ce que** le mécanisme comprend :
- des moyens de détrompage permettant de positionner selon une direction verticale du véhicule le siège dans une position telle que le pied avant repose sur le fil d'ancrage avant (4a) et le pied arrière repose sur le fil d'ancrage arrière (4b), et
- des moyens de détection de contact avec au moins un des fils d'ancrage avant (4a) ou arrière (4b), les moyens de détection entrainant le déclenchement de moyens de verrouillage lors du déplacement du siège dans une direction longitudinale du véhicule.

2. Mécanisme d'ancrage selon la revendication 1, **caractérisé en ce que** les moyens de détection de fil d'ancrage comprennent un détecteur de fil (18) mobile en rotation superposé aux moyens de verrouillage conçus pour, lors d'un contact avec un fil d'ancrage, entrer en rotation depuis une position de non détection dans laquelle le détecteur de fil (18) masque les moyens de verrouillage vers une position de détection dans laquelle le détecteur de fil (18) ouvre l'accès aux moyens de verrouillage et déclenche les moyens de verrouillage.

3. Mécanisme d'ancrage selon la revendication 2, **caractérisé en ce que** les moyens de verrouillage comprennent un verrou fixe (27) et un verrou mobile (12) en rotation conçus pour enserrer un fil d'ancrage (4a ou 4b) dans une position de verrouillage du mécanisme, la rotation du verrou mobile (12) étant pilotée par le détecteur de fil (18).

4. Mécanisme d'ancrage selon la revendication 3, **caractérisé en ce que** le détecteur de fil (18) présente une surface de détection (20) superposée sur le verrou fixe (27) et une saillie de pilotage (22) conçue pour coopérer avec une encoche (15) pratiquée dans le verrou mobile (12) en vue d'amener le verrou mobile (12) vers sa position de verrouillage lors de la rotation du détecteur de fil (18) contre un fil d'ancrage (4).

5. Mécanisme d'ancrage selon l'une des revendications 3 à 4, **caractérisé en ce qu'**il comprend des moyens élastiques qui agissent sur le verrou mobile (12) et sur le détecteur de fil d'ancrage (18) en vue de positionner le détecteur de fil d'ancrage (18) vers sa position de non détection dans laquelle le détecteur de fil d'ancrage (18) masque le verrou fixe (27) et pousse le verrou mobile (12) vers sa position de non verrouillage.

6. Mécanisme d'ancrage selon la revendication 5, **caractérisé en ce qu'**il comprend un ressort en épingle (30) ayant au moins une spire prolongée par une première branche (31) qui est retenue par un pontet (33) supporté par le détecteur de fil d'ancrage (18) et par une seconde branche (32) qui s'appuie sur le verrou mobile (12).

7. Mécanisme d'ancrage selon l'une des revendications 1 à 6, **caractérisé en ce qu'**il comprend une poignée (11) montée en pivot sur un axe (34) lié au verrou mobile (12) par un doigt (37) engagé dans une lumière (19) pratiquée dans le verrou mobile (12).

8. Mécanisme d'ancrage selon l'une des revendications 1 à 7, **caractérisé en ce qu'**il comprend une butée postérieure (28) et un talon (29) au niveau de son pied arrière (10) et un méplat (9) au niveau du pied avant (7).

9. Mécanisme d'ancrage selon l'une des revendications 1 à 8 **caractérisé en ce qu'**il comprend un platine (25) qui intègre au moins l'un des élément du groupe comprenant le verrou fixe (27), la butée postérieure (28), le talon (29), un axe de rotation (19) du détecteur de fil d'ancrage (18), un axe de rotation (13) du verrou mobile (12), une butée (38) d'arrêt du verrou mobile (12), un pion (35) d'arrêt du détecteur de fil d'ancrage (18).

10. Mécanisme d'ancrage selon l'une des revendications 1 à 9, **caractérisé en ce qu'**il comprend deux carters latéraux (5).

11. Mécanisme d'ancrage selon la revendication 10, **caractérisé en ce que** le carter latéral sur lequel est montée la poignée (11) reçoit une zone témoin (39) qui est masquée par la poignée lorsque le mécanisme est verrouillé sur le fil d'ancrage (4a ou 4b).

## Claims

1. A mechanism (1) for anchoring a seat, in particular an automobile seat allowing locking of the seat on a front anchoring wire (4a) and on a rear anchoring wire (4b) arranged in a floor of the vehicle and an unlocking of the seat from the two wires, the anchoring mechanism having a front foot (7) designed to be engaged on the front anchoring wire (4a) and a rear foot (10) designed to be engaged on the rear wire (4b), at least one of the front or rear feet being equipped with locking means
**characterized in that** the mechanism comprises:
- foolproofing means making it possible to position the seat in a position along a vertical direction of the vehicle such that the front foot rests on the front anchoring wire (4a) and the rear foot rests on the rear anchoring wire (4b), and
- means for detecting contact with at least one of the front (4a) or rear (4b) anchoring wires, the detection means causing the triggering of locking means during the movement of the seat in a longitudinal direction of the vehicle.

2. The anchoring mechanism according to claim 1, **characterized in that** the anchoring wire detection means comprises a rotationally mobile wire detector (18) superimposed on the locking means designed, during contact with an anchoring wire, to enter into rotation from a non-detection position in which the wire detector (18) conceals the locking means toward a detection position in which the wire detector (18) opens access to the locking means and triggers the locking means.

3. The anchoring mechanism according to claim 2, **characterized in that** the locking means comprises a fixed bolt (27) and a rotationally mobile bolt (12) designed to grip an anchoring wire (4a or 4b) in a locking position of the mechanism, the rotation of the mobile bolt (12) being piloted by the wire detector (18).

4. The anchoring mechanism according to claim 3, **characterized in that** the wire detector (18) has a detection surface (20) superimposed on the fixed bolt (27) and a piloting protrusion (22) designed to cooperate with a notch (15) formed in the mobile bolt (12) in order to bring the mobile bolt (12) toward its locking position during the rotation of the wire detector (18) against an anchoring wire (4).

5. The anchoring mechanism according to one of claims 3 to 4, **characterized in that** it comprises elastic means that act on the mobile bolt (12) and on the anchoring wire detector (18) with a view to positioning the anchoring wire detector (18) toward its non-detection position in which the anchoring wire detector (18) conceals the fixed bolt (27) and pushes the mobile bolt (12) toward its non-locking position.

6. The anchoring mechanism according to claim 5, **characterized in that** it comprises a pin spring (30) having a coil extended by a first branch (31) that is retained by a hasp (33) supported by the anchoring wire detector (18) and by a second branch (32) that pushes on the mobile bolt (12).

7. The anchoring mechanism according to one of claims 1 to 6, **characterized in that** it comprises a handle (11) pivotably mounted on an axle (34) connected to the mobile bolt (12) by a finger (37) engaged in a lumen (19) formed in the mobile bolt (12).

8. The anchoring mechanism according to one of claims 1 to 7, **characterized in that** it comprises a rear stop (28) and a heel (29) at its rear foot (10) and a flat portion (9) at the front foot (7).

9. The anchoring mechanism according to one of claims 1 to 8, **characterized in that** it comprises a plate (25) that integrates at least one of the elements from the group comprising the fixed bolt (27), the rear stop (28), the heel (29), an axis of rotation (19) of the anchoring wire detector (18), an axis of rotation (13) of the mobile bolt (12), a stop (38) for stopping the mobile bolt (12), a slug (35) for stopping the anchoring wire detector (18).

10. The anchoring mechanism according to one of claims 1 to 9, **characterized in that** it comprises two lateral casings (5).

11. The anchoring mechanism according to claim 10, **characterized in that** the lateral casing on which the handle (11) is mounted receives an indicating zone (39) that is concealed by the handle when the mechanism is locked on the anchoring wire (4a or 4b).

## Patentansprüche

1. Verankerungsmechanismus (1) eines Sitzes, vor allem eines Kraftfahrzeugsitzes, der eine Verriegelung des Sitzes auf einem vorderen Verankerungsdraht (4a) und auf einem hinteren Verankerungsdraht (4b) und eine Entriegelung des Sitzes von den zwei Drähten erlaubt, der im Boden eines Kraftfahrzeugs angeordnet ist, wobei der Verankerungsmechanismus einen vorderen Fuß (7) umfasst, der dazu bestimmt ist, auf dem vorderen Verankerungsdraht (4a) einzugreifen und einen hinteren Fuß (10), der dazu bestimmt ist, auf dem hinteren Draht (4b) einzugreifen, wobei mindestens einer der Füße, der vordere bzw. der hintere, mit Verriegelungsmitteln ausgestattet ist,
**dadurch gekennzeichnet, dass** der Mechanismus umfasst:
- Unverwechselbarkeitsmittel, die es erlauben, den Sitz gemäß einer vertikalen Richtung des Fahrzeugs in eine derartige Position zu positionieren, dass der vordere Fuß auf dem vorderen Verankerungsdraht (4a) ruht und der hintere Fuß auf dem hinteren Verankerungsdraht (4b), und
- Mittel zur Ermittlung des Kontakts mit mindestens einem der vorderen (4a) oder hinteren (4b) Verankerungsdrähte, wobei die Ermittlungsmittel das Auslösen von Verriegelungsmitteln bei Verschiebung des Sitzes in eine Längsrichtung des Fahrzeugs bewirken.

2. Verankerungsmechanismus nach Anspruch 1, **dadurch gekennzeichnet, dass** die Verankerungsdraht-Ermittlungsmittel einen drehbar bewegbaren Drahtdetektor (18) umfassen, der über den Verriegelungsmitteln steht, der ausgebildet ist, um bei einem Kontakt mit einem Verankerungsdraht aus einer Position der Nicht-Ermittlung, in der der Drahtdetektor (18) die Verriegelungsmittel verdeckt, in Rotation einzutreten in eine Ermittlungsposition, in der der Drahtdetektor (18) den Zugang zu den Verriegelungsmitteln öffnet und die Verriegelungsmittel auslöst.

3. Verankerungsmittel nach Anspruch 2, **dadurch gekennzeichnet, dass** die Verriegelungsmittel einen starren Riegel (27) und einen drehbar bewegbaren Riegel (12) umfassen, die ausgebildet sind, um einen Verankerungsdraht (4a oder 4b) in einer Verriegelungsposition des Mechanismus zu umschließen, wobei die Rotation des bewegbaren Riegels (12) vom Drahtdetektor (18) gelenkt wird.

4. Verankerungsmechanismus nach Anspruch 3, **dadurch gekennzeichnet, dass** der Drahtdetektor (18) eine Detektionsfläche (20) über dem starren Riegel (27) aufweist und einen Lenkvorsprung (22), der ausgebildet ist, um mit einer in den bewegbaren Riegel (12) eingearbeiteten Kerbe (15) zusammenzuarbeiten, um den bewegbaren Riegel (12) in seine Verriegelungsposition bei der Rotation des Drahtdetektors (18) gegen einen Verankerungsdraht (4) zu führen.

5. Verankerungsmechanismus nach einem der Ansprüche 3 bis 4, **dadurch gekennzeichnet, dass** er elastische Mittel umfasst, die auf den bewegbaren Riegel (12) und auf den Verankerungsdrahtdetektor (18) einwirken, um den Verankerungsdrahtdetektor (18) in seine Nicht-Ermittlungsstellung zu positionieren, in der der Verankerungsdrahtdetektor (18) den starren Riegel (27) verdeckt und den bewegbaren Riegel (12) in seine Nicht-Verriegelungsstellung schiebt.

6. Verankerungsmechanismus nach Anspruch 5, **dadurch gekennzeichnet, dass** er eine Schenkelfeder (30) umfasst mit mindestens einer Windung, die durch einen ersten Arm (31) verlängert wird, der von einem Steg (33) zurückgehalten wird, der von dem Verankerungsdrahtdetektor (18) gestützt wird, und durch einen zweiten Arm (32), der sich auf dem bewegbaren Riegel (12) abstützt.

7. Verankerungsmechanismus nach einem der Ansprüche 1 bis 6, **dadurch gekennzeichnet, dass** er einen Griff (11) umfasst, der schwenkbar auf einer Achse (34) montiert ist, die mit dem bewegbaren Riegel (12) anhand eines Fingers (37) verbunden ist, der in eine Öffnung (19) eingreift, die in den bewegbaren Riegel (12) eingearbeitet ist.

8. Verankerungsmechanismus nach einem der Ansprüche 1 bis 7, **dadurch gekennzeichnet, dass** er einen hinteren Anschlag (28) und einen Absatz (29) auf Ebene seines hinteren Fußes (10) umfasst und eine Abflachung (7) auf Ebene des vorderen Fußes (7).

9. Verankerungsmechanismus nach einem der Ansprüche 1 bis 8, **dadurch gekennzeichnet, dass** er eine Platte (25) umfasst, die mindestens eines der Elemente der Gruppe integriert, die den starren Riegel (27), den hinteren Anschlag (28), den Absatz (29), eine Rotationsachse (19) des Verankerungsdrahtdetektors (18), eine Rotationsachse (13) des bewegbaren Riegels (12), einen Anschlag (38), der den bewegbaren Riegel (12) stoppt, einen Stift (35), der den Verankerungsdrahtdetektor (18) stoppt, umfasst.

10. Verankerungsmechanismus nach einem der Ansprüche 1 bis 9, **dadurch gekennzeichnet, dass** er zwei seitliche Gehäuse (5) umfasst.

11. Verankerungsmechanismus nach Anspruch 10, **dadurch gekennzeichnet, dass** das seitliche Gehäuse, auf dem der Griff (11) montiert ist, einen Kontrollbereich (39) aufnimmt, der von dem Griff verdeckt ist, wenn der Mechanismus auf dem Verankerungsdraht (4a oder 4b) verriegelt ist.
